# EUROPEAN PATENT SPECIFICATION

(11) **EP 3 599 437 B1**
(45) Date of publication and mention of the grant of the patent: **15.09.2021**
(21) Application number: 19170845.2
(22) Date of filing: 24.04.2019
(51) Int. Cl.: F25D 29/00, H04L 12/00

(54) **REFRIGERATOR AND CLOUD SERVER DETECTING ABNORMAL STATE AND METHOD THEREOF**
KÜHLGERAT UND CLOUD-SERVER ERFASSEN EINES ABNORMALEN ZUSTANDES UND VERFAHREN DAFÜR
RÉFRIGÉRATEUR ET SERVEUR CLOUD POUR L' DÉTECTION D'ÉTAT ANORMAL ET SON PROCÉDÉ

(30) Priority: 27.04.2018 KR 20180049353
(43) Date of publication of application: 29.01.2020
(73) Proprietor: LG Electronics Inc., 07336 SEOUL (KR)
(72) Inventor: JUNG, Jin-Hoon, 08592 Seoul (KR); KWON, Yong-Hoan, 08592 Seoul (KR); CHA, Eunho, 08592 Seoul (KR)
(74) Representative: Vossius & Partner Patentanwälte Rechtsanwälte mbB

(56) References cited:
- WO-A1-2014/171119
- JP-A- 2002 162 149
- JP-A- 2007 305 145
- KR-A- 20180 003 519

## Description

The present invention relates to a device of detecting an abnormal state and a method for detecting such an abnormal state.

Electronic products are operated in various environments. Thus, a structure or components of the product may be changed during use of the product by the user after the product is manufactured and shipped. For example, if the user frequently turns a TV on and off, a malfunction may occur in a power connection. Further, when an air conditioner comprising an outdoor unit and various mechanical or chemical components is operated, an abnormal state may occur during operation of the air conditioner.

Likewise, a refrigerator may be impacted mechanically or electrically as the refrigerator is frequently used. As a result, various kinds of abnormality, such as an abnormal change in the property of a refrigerant or an abnormal change in the operation of a compressor, may occur. As it is difficult to necessarily clearly determine a cause of the abnormal state from an outside, the user may not resolve the abnormal state of the refrigerator and a service representative may visit to a site where the refrigerator is installed and has to resolve the abnormality of the refrigerator.

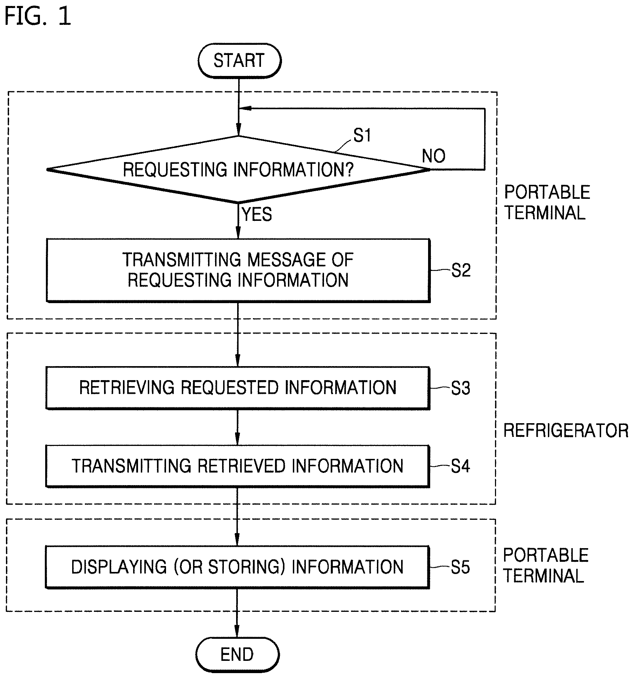

Korean Patent No. 10-1215097 discloses a wireless communication device and a wireless communication method of a refrigerator that may provide diagnostic information or state information of the refrigerator through a portable terminal. The refrigerator may transmit and receive user information to and from the portable terminal. FIG. 1 shows a process of transmitting and receiving information between the refrigerator and the portable terminal, which is described in the above-mentioned document.

First, it is determined that a portable terminal receives an information request from the user (S1), and the portable terminal transmits an information request message to the refrigerator (S2). The refrigerator retrieves the requested information (S3) and transmits the retrieved information back to the portable terminal (S4). The portable terminal displays and stores the received information (S5). The steps of FIG. 1 may be performed when the user desires to determine the state of a refrigerator through the portable terminal.

However, as shown in FIG. 1, the state of the refrigerator may only be determined based on basic information of the refrigerator. There is a limitation to the determination of the abnormal state of the refrigerator. FIG. 1 does not show a content of determining the state of the refrigerator as abnormal or normal. However, FIG. 1 shows that information is confirmed through the portable terminal.

Therefore, FIG. 1 does not suggest how to generally determine an abnormal state of the refrigerator, and does not suggest how to use the received state information in any manner. Accordingly, the method according to Fig. 1 does not transmit the abnormal state of the electronic products such as a TV, an air conditioner, a refrigerator, and the like, to a customer in real time or at a predetermined time interval. Therefore, there is a need for determining the abnormal state of the electronic products such as the refrigerator and quickly responding to the determined abnormal state.

The invention is defined by the appending independent claims. The present invention solves the above-mentioned problems. The present invention provides a device of detecting an abnormal state occurring during operation of a refrigerator before the abnormality causes a failure of the refrigerator.

The present disclosure provides a device of continuously transmitting a state of the home appliances to a server and determining an abnormal state or a normal state based on the received information by the server.

According to the present disclosure, a service center may determine a state of the home appliances based on accumulated sensing information and provide an appropriate customer service even if a user does not correctly explain a state of the home appliance when the user applies for a customer service.

KR 2008 0003519 A discloses a method of remotely diagnosing an abnormal state of a refrigerator. JP 2002 162149 A discloses a system of remotely inspecting a refrigerator, WO 2014/171119 A1 discloses a data processing system that collects log information for an electrical device via a network and provides a service based on the collected log information for an authenticated user. JP 2007 305145 A discloses a method of periodically checking operation information of consumer electric products and inform a user if any failure or anomaly is detected from the products.

The invention is defined by the appended independent claims. According to the present disclosure in the following description, a refrigerator of detecting an abnormal state includes a plurality of sensors, a communication unit configured to transmit sensing information sensed by the sensors to a cloud server and a controller that controls information on the abnormal state provided by a cloud server or a monitoring server to be outputted to a display.

According to the present disclosure in the following description, a cloud server of detecting an abnormal state includes a storage unit that stores pattern information so as to compare various kinds of sensing information sensed by a plurality of refrigerators to determine the abnormal state, and a controller configured to compare pattern information stored in the storage unit and sensing information sensed by the first refrigerator at a first time point and a second time point so as to generate information on the abnormal state.

According to the present disclosure in the following description, a method for detecting an abnormal state by a monitoring server includes receiving, by a communication unit of a monitoring server, information on an abnormal state of a first refrigerator and sensing information with respect to the information on the abnormal state from a cloud server, determining, by a controller of the monitoring server, a monitoring display unit managed by a representative of the first refrigerator to output information received by the communication unit and providing information received by the communication unit and user information on the first refrigerator to the monitoring display unit, and outputting, by the monitoring display unit, the provided information and transmitting, by the communication unit and the monitoring display unit, operation information required for resolving the abnormal state and information on the abnormal state to a first refrigerator.

A device may resolve the abnormal state by detecting the abnormal state occurring during the operation of the home appliances before the abnormality causes failure of the home appliances.

The cloud server determines the abnormal state or a normal state based on the received information, and the sensing information of various sensors indicating the state of the refrigerator is continuously transmitted to the cloud server.

Further, it is possible that even if the user may not accurately explain the state of the home appliances when the user applies for the customer service, the service center determines the state of the home appliances based on the accumulated sensing information to provide an appropriate customer service.

### BRIEF DESCRIPTION OF THE DRAWINGS

FIG. 1 shows a process of transmitting and receiving information between a refrigerator and a portable terminal, which is described in the above-mentioned document.
FIG. 2 shows a process of transmitting operation information of a device to a server according to an embodiment of the present disclosure.
FIG. 3 shows a configuration of a refrigerator according to an embodiment of the present disclosure.
FIG. 4 shows a configuration of a cloud server according to an embodiment of the present disclosure.
FIG. 5 shows a configuration of a monitoring server according to an embodiment of the present disclosure.
FIG. 6 shows a process of determining an abnormal state based on information on sensing of temperature by a cloud server according to an embodiment of the present disclosure.
FIG. 7 shows a process of recommending an optimal setting temperature to a user based on sensed temperature information according to an embodiment of the present disclosure.
FIG. 8 shows an embodiment of changing a setting temperature depending on a change of a sensing temperature according to an embodiment of the present disclosure.
FIG. 9 shows a process of resetting a setting temperature based on an outdoor air temperature according to an embodiment of the present disclosure.
FIG. 10 shows determining an abnormal state by a cloud server based on door opening information and sensed temperature information according to an embodiment of the present disclosure.
FIG. 11 shows a process of determining an abnormal state by a cloud server based on information sensed during an operation of a compressor according to an embodiment of the present disclosure.
FIG. 12 shows information on a compressor received from a refrigerator according to an embodiment of the present disclosure.
FIG. 13 shows a process in which each device operates according to an embodiment of the present disclosure.
FIG. 14 shows transmitting, by a plurality of refrigerators, sensed information to a cloud server according to an embodiment of the present invention.

Hereinafter, embodiments of the present disclosure will be described in detailed with reference to the accompanying drawings so that those skilled in the art can easily carry out the present disclosure.

In order to clearly describe the embodiments, the description irrelevant to the embodiments has been omitted. Same or like reference numerals designate same or like components throughout the specification. Further, some embodiments will be described in detail with reference to the illustrative drawings. Regarding the reference numerals assigned to the components in the drawings, it should be noted that the same components will be designated by the same reference numerals, wherever possible, even though they are shown in different drawings. Furthermore, in relation to describing the present disclosure, the detailed description of well-known related configurations or functions can be omitted when it is deemed that such description may cause ambiguous interpretation of the present disclosure.

Also, in relation to describing components of the present disclosure, terms such as first, second, A, B, (a), (b) or the like may be used. Each of these terms is not used to define an essence, order, sequence or the number of a relevant component but used merely to distinguish the relevant component from other component(s). It should be noted that, when it is described in the specification that one component is "connected," "coupled" or "joined" to another component, the former may be directly "connected," "coupled," and "joined" to the latter or "connected", "coupled", and "joined" to the latter via another component.

In addition, in relation to implementing the present disclosure, features of the present disclosure may be described as being performed by separate components for ease of explanation. However, these features may be implemented by a single device or module, or one feature may be implemented by several devices or modules.

In the present disclosure, a refrigerator will be described as a main embodiment that enables monitoring an abnormal state of a device. The abnormal state means that the device is not operated normally and does not necessarily mean a failure state of the device. A state before the failure of the device occurs is also included in the abnormal state, and the failure state is included in the abnormal state.

As described above, the refrigerator has a very complex operation state, which means various possibilities of the abnormal states. Thus, a more complex determination of the abnormal state may be required for other home appliances. Therefore, the invention is limited to a refrigerator.

According to the embodiment of the present disclosure, the refrigerator is mainly described as a device that refrigerates or freezes a stored product. The refrigerator includes all kinds of refrigerating and freezing devices, such as a general refrigerator that stores food, a kimchi refrigerator, a beverage refrigerator, a household refrigerator, a commercial refrigerator, and a freezing device having only a freezer. Further, the present invention is also applied to a device that refrigerates stored goods, other than food, such as a cosmetics refrigerator. Further, a refrigerating device installed in a large refrigerating trailer, which is a portable type other than a fixed type, is also included in the embodiment described in the present invention.

According to the present disclosure, the refrigerator may collect information on an internal state based on various communication protocols and transmit the collected information to an external cloud server. In one embodiment, the communication may be made via WiFi, but the present invention is not limited thereto.

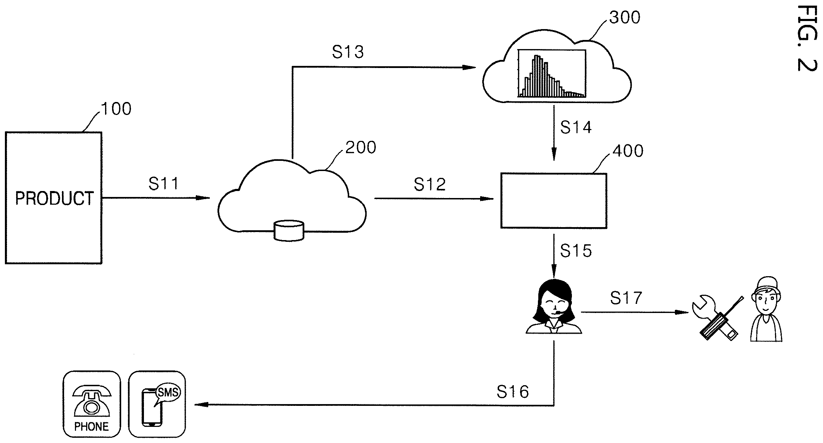

FIG. 2 shows a process of transmitting operation information of a device to a server according to an embodiment of the present disclosure. In one embodiment, the device is a refrigerator having a plurality of components. The refrigerator 100 transmits operation information on monitoring of the components for a predetermined time interval (for example, in units of seconds or minutes) to a cloud server 200 (S11).

Monitoring of the components may be performed in various ways, for example, by checking an opening and closing of a door, changes in temperature or humidity, a circulation of a refrigerant, an operation of a compressor, and the like. In a case of another device different from the refrigerator, various kinds of operation information that may be generated by the device may be transmitted to the cloud server 200. The transmission may be performed via Wi-Fi as exemplified in S11.

Meanwhile, the cloud server 200 compares and analyzes the received operation information together with previous operation information of the product, and transmits encoded data to a monitoring server 400 of a call center (S12). The cloud server 200 may determine and/or predict an abnormal state of the product based on comparison data different from the received data or previous data of the product, and the like. When the abnormality of the product is found, the information and the abnormal state of the product are transmitted to the monitoring server 400 of the call center.

In this process, the cloud server 200 transmits the encoded data with respect to the received operation information to a separate analysis server 300 (S13). The analysis server 300 may analyze the encoded data. The cloud server 200 may be integrated with the analysis server 300, or the cloud server 200 may be separate from the analysis server 300. The analysis server 300 generates a diagnostic result on an operation of the refrigerator based on the received encoded data and transmits the generated diagnostic result to the monitoring server of the call center (S14).

The monitoring server 400 of the call center may determine whether the abnormal state occurs during an operation of the device based on the information provided by the cloud server 200 or the analysis server 300. The monitoring server 400 of the call center may determine the status of the device before the abnormal state has occurred, based on the information provided by the cloud server 200 or the analysis server 300. When the abnormal state occurs, the monitoring server 400 controls a notification message to be transmitted to a monitoring representative (S15).

The monitoring representative calls or sends a message to a contact number of an owner of the device and notifies the owner of the device of a method of resolving the abnormal state (S16). Alternatively, the monitoring representative may transmit the information to a customer service representative in order to repair the device (S17). The two steps, S16 and S17 may be performed sequentially or simultaneously to adjust a visit schedule of the customer service representative in consideration of schedule of the owner of the device and the customer service representative.

The process of FIG. 2 is summarized as follows. When home appliances installed in the house transmits the operation information of the product to the cloud server 200 using a communication method such as Wi-Fi (S11), the cloud server 200 determines the abnormal state of the product or predicts a possibility of occurrence of the abnormal state based on the received data. When the cloud server 200 determines the abnormal state of the product, the information and abnormal contents of the product are transmitted to the monitoring server 400 of the call center (S12).

In this process, analysis information on the abnormal state analyzed by the analysis server 300 arranged in the cloud server 200 or separately from the cloud server 200 may also be transmitted to the monitoring server 400 (S14). The monitoring representative of the call center may contact the customer and a repair person to set a schedule of repair visit to resolve the abnormal state.

According to the invention, the information on the abnormal state described later is generated by the cloud server 200 based on first sensing information and second sensing information having an association with each other among the sensing information sensed by various sensors arranged in the refrigerator 100. When the second sensing information is not matched with the pattern information stored in the cloud server 200, the cloud server 200 determines a state corresponding to the second sensing information that is not matched with the pattern information as an abnormal state based on the first sensing information, and generate information on the abnormal state. The association indicates a relation of the sensors that generate the sensing information and sensing data generated by the sensors.

For example, the second sensing information sensed by the second sensor is not matched with specific pattern information, that the second sensing information is an abnormal change in the temperature value of the temperature sensor, an abnormal state of an operation of an compressor, sensed by a sensor of the compressor, and the like. The pattern information may be accumulated during operation of refrigerators as big data, and the pattern information may be verified. The pattern information can be compared with combination of the sensed value of each refrigerator. The pattern information may be compared with changed value of each refrigerator's sensor. In this state, the cloud server 200 correctly determines whether a refrigerator is in the abnormal state even if the second sensing information is not matched with the pattern information, based on the first sensing information generated by other sensors different from the second sensor and having an association therewith.

That is, even when the information sensed by the specific sensor is not included in a range of a normal pattern or is determined to match the abnormal pattern, it is not directly defined as the abnormal state, and an accuracy of determining the abnormal state is enhanced based on the information sensed by the other sensors.

In this case, the abnormal state may include a malfunction state of a first sensor that generates the first sensing information or a malfunction state of a second sensor that generates the second sensing information.

Further, the sensor that generates the second sensing information compared with the normal pattern or the abnormal pattern includes a sensor continuously monitoring changed states, such as a temperature sensor or a sensor of a compressor. In addition, the second sensing information may be generated by a sensor that determines a state of ice or measures water quantity and water pressure, or senses a defrost cycle or a defrost state.

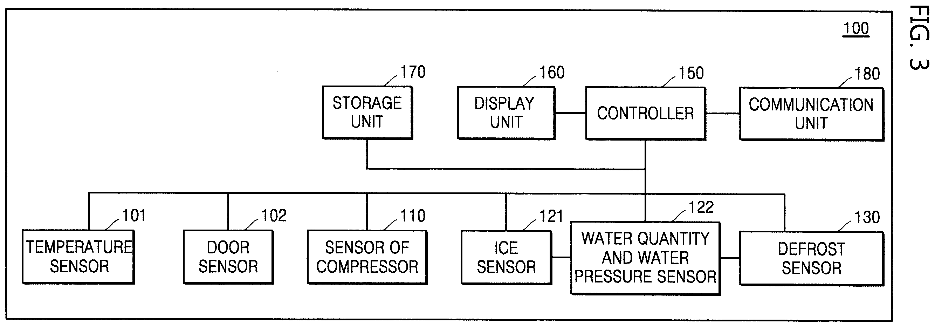

FIG. 3 shows a configuration of a refrigerator according to an embodiment of the present disclosure. A door, a compressor, a motor of compressor, and the like, which are required for the refrigerator to be operated, are not shown, and only elements required for constituting the present invention have been shown. In addition to the components shown in FIG. 3, various components required for providing an actual function of the refrigerator are also included in the refrigerator described in the present invention.

The refrigerator 100 includes various types of sensors. A temperature sensor 101 that senses the temperatures of a refrigerating compartment and a freezer compartment, a door sensor 102 that senses an opening and closing of a door, a sensor of a compressor 110 that senses an operation pattern of the compressor, an ice sensor 101 that senses an amount of ice used and a state of ice, a water quantity and water pressure sensor 122 that senses an amount of water used and a water pressure, and a defrost sensor 130 that monitors a defrost cycle or senses frost or senses a defrost state of refrigerator are provided as the sensors. A water quantity and water pressure sensor 122 may include a flow sensor. The operation pattern of the compressor may be patterned information of compressor's operation mode, for example, mode of compressing, mode of discharging, mode of evaporating, mode of condensing.

A storage unit 170 stores the sensing information sensed by the sensors together with time information. The sensing information stored in the storage unit 170 is erased after a predetermined period of time. However, when the abnormal state is determined, the sensing information related to the abnormal state may be accumulated and stored so as not to be erased.

A communication unit 180 transmits stored information (sensing information and time information) and setting information set to the refrigerating compartment and the freezer compartment to a cloud server 200.

A display unit 160 outputs various kinds of information. Audio data such as sound, and image data such as characters and images may be outputted.

A controller 150 controls the sensors, the storage unit 170, the communication unit 180, and the display unit 160, and adjusts an interval at which sensing information is transmitted to the server or an interval at which the sensor is sensed. When the communication unit 180 receives the information on the abnormal state generated based on the sensing information sensed by the sensor from a cloud server 200 or a monitoring server 400, the controller 150 controls received information on the abnormal state to be outputted to the display unit 160.

The controller 150 may adjust an interval at which the sensing information is transmitted or an interval at which the sensor senses. In this case, the transmission is performed at a preset interval. Then, if the abnormal state is determined, an interval at which the sensing information is transmitted may be greater or less.

For example, the controller 150 may adjust a sensing period after the information on the abnormal state is received. The controller 150 manages a transmission period of the sensing information in a different manner depending on the sensors. Further, after the communication unit 180 receives the information on the abnormal state, the controller 150 may set the transmission period or the sensing period of the sensing information sensed by the sensor with respect to the information on the abnormal state to be less than the transmission period or the sensing period before the information on the abnormal state is received.

When the abnormal state occurs, the related sensors generate sensing information more frequently for more accurate monitoring. For example, when the temperature sensor is sensing changes in temperature at time intervals of one minute, if the refrigerator 100 receives information on the abnormal state indicating that the abnormal change in temperature occurs, the controller 150 may transmit the information on the abnormal state to the server at time intervals of 30 seconds at which the temperature is sensed.

Further, the communication unit 180 may receive operation information required to resolve the abnormal state from the monitoring server 400. According to an embodiment, the information on the abnormal state may indicate an abnormal state of a particular component of the refrigerator. Further, according to an embodiment, the operation information is information on customer service schedule or optimal setting information required to resolve the abnormal state. The customer service schedule includes a schedule for the representative to visit the installation site and resolve the abnormal state of the device. Further, a schedule promised to resolve the abnormal problem remotely also belongs to a customer service schedule.

Optimal setting information means information that a user of a refrigerator 100 needs to set in order to resolve the abnormal state of the device. For example, if the temperature of the refrigerator is wrongly set (set too low or set too high), a guidance message to inform the user to adjust the temperature of the refrigerator or information that enables activating an optimal setting are included in the optimal setting information.

According to the configuration of FIG. 3, when the abnormal state is generated in the refrigerator 100, a problem that the user finds after a failure of the refrigerator 100 occurs is solved, and a problem is solved in advance before the abnormality causes the failure of the refrigerator 100. To this end, various kinds of information generated by the refrigerator 100 is transmitted to the cloud server 200 by the communication unit 180. The cloud server 200 or an analysis server 300 that cooperates with the cloud server 200 determines that the refrigerator is in the abnormal state by comparing the received information with pattern information and provides the information on the abnormal state to the monitoring server 400.

Alternatively, the cloud server 200 may provide the information on the abnormal state to the refrigerator 100 directly. As a result, the user of the refrigerator 100 or the customer service representative for the refrigerator 100 who becomes aware of the abnormal state of the refrigerator 100 may recognize the abnormal state of the refrigerator 100 and may take measures to resolve the current abnormal state of the refrigerator.

As a result, the controller 150 may display information on customer service schedule to the display unit 160. Further, the controller 150 may accumulate and store the information sensed by the sensor as the information on the abnormal state and store the accumulated sensed information in the storage unit 170 in order to accumulate and store information required for the customer service.

For example, when changes in the temperature of the refrigerator is abnormal as a result of sensing the temperature, the controller 150 may accumulate and store the information on sensing of the temperature in the storage unit 170 so that the temperature change is accurately determined. This kind of information may be a basis for accurately confirming the information sensed by the representative and determining the problem of the refrigerator 100 during customer service.

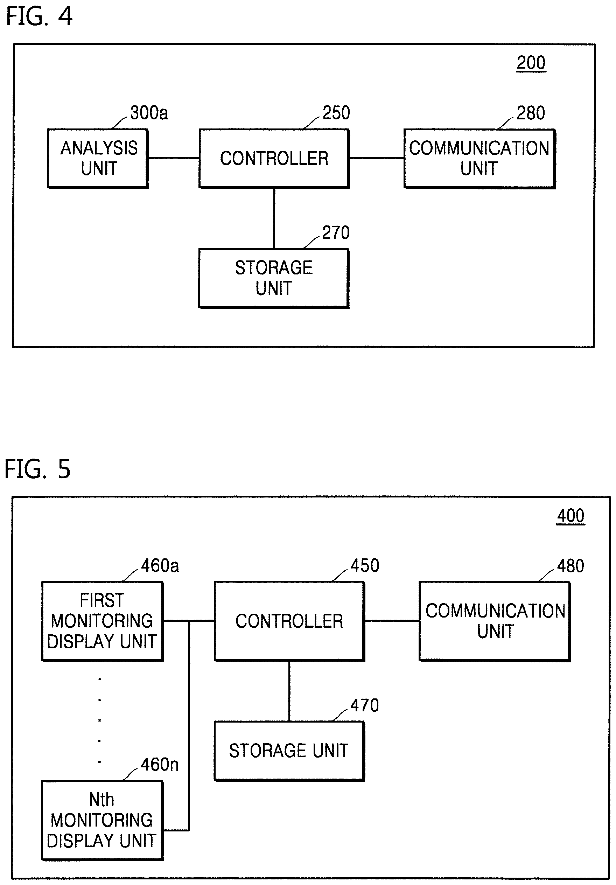

FIG. 4 shows a configuration of a cloud server according to an embodiment of the present invention. As shown in FIG. 2, the cloud server 200 continuously receives sensing information from the devices such as a refrigerator and determines an abnormal state based on accumulated information. For convenience of explanation, a relation between a refrigerator and a cloud server will be mainly described.

A communication unit 280 receives sensing information from a plurality of refrigerators. The communication unit 280 receives sensing information sensed at a first time point from a first refrigerator. A storage unit 270 stores sensing information received by the communication unit 280. In addition, the storage unit 270 also stores pattern information. The pattern information is standard information or criteria being compared with various kinds of sensing information to determine an abnormal state.

A controller 250 compares the pattern information stored in the storage unit 270 to determine the abnormal state based on the sensing information received by the communication unit 280 and the sensing information (for example, sensing information sensed by the first refrigerator at the first time point and the second time point) on the first refrigerator at various time points in order to determine the information on the abnormal state.

When the information on the abnormal state is determined by a controller 250, the communication unit 280 may transmit information on the abnormal state to the first refrigerator or a monitoring server 400.

In this process, the pattern information may be updated or replaced after being stored in a storage unit 270 at a regular interval. For example, when an analysis unit 300a is included in the cloud server 200, the analysis unit 300a may accumulate and store the information on normal pattern and the information on abnormal pattern generated based on the sensing information sensed by the first refrigerator and the plurality of second refrigerators. The cloud server 200 may provide the pattern information to the storage unit 270. If an analysis server 300 is provided as a separate external device, the analysis server 300 may provide the accumulated information on normal pattern and the information on abnormal pattern to the cloud server 200 based on a communication protocol.

The information on normal pattern is accumulated sensing information during the refrigerator's normal operation, i.e., the information on normal pattern includes sensed value of normal state of refrigerator. The information on abnormal pattern is accumulated sensing information during the refrigerator's abnormal operation, i.e., the information on abnormal pattern includes sensed value of abnormal state of refrigerator.

Alternatively, the analysis server 300 may compare the sensed information provided by the cloud server 200 with the information on normal pattern and the information on abnormal pattern, and directly notify the monitoring server 400 of the abnormal state.

FIG. 5 shows a configuration of a monitoring server according to an embodiment of the present invention. A monitoring server 400 receives information on the abnormal state of a specific device from a cloud server 200 or an analysis server 300 and resolves the abnormal state of the device.

A communication unit 480 receives information on the abnormal state of a first refrigerator, sensing information with respect to the information on the abnormal state, and information on notification message recipient with respect to a first refrigerator from a cloud server 200. Further, the communication unit 480 transmits the information on the abnormal state described above or operation information required for resolving the abnormal state to the first refrigerator. According to an embodiment, the operation information is required for follow-up measures, for example, optimal setting information, information on customer service schedule to resolve the abnormal state determined based on the information on the abnormal state provided by the cloud server 200.

A controller 450 determines a monitoring display unit managed by a representative of the first refrigerator to output the information received by the communication unit 480. The monitoring server 400 may generate information to be transmitted to a computer screen managed by a plurality of monitoring representatives and output information on the screen. The determined monitoring display units 460a to 460n output the information.

When predetermined operation information (for example, information on customer service schedule or optimal setting information) is generated between the monitoring representative and a user of the refrigerator based on the outputted information, the communication unit 480 of the monitoring server 400 transmits the predetermined operation information. The operation information may be stored in a storage unit 470 to determine a processed state in a subsequent step. An embodiment will be described in detail based on each of the above-described components.

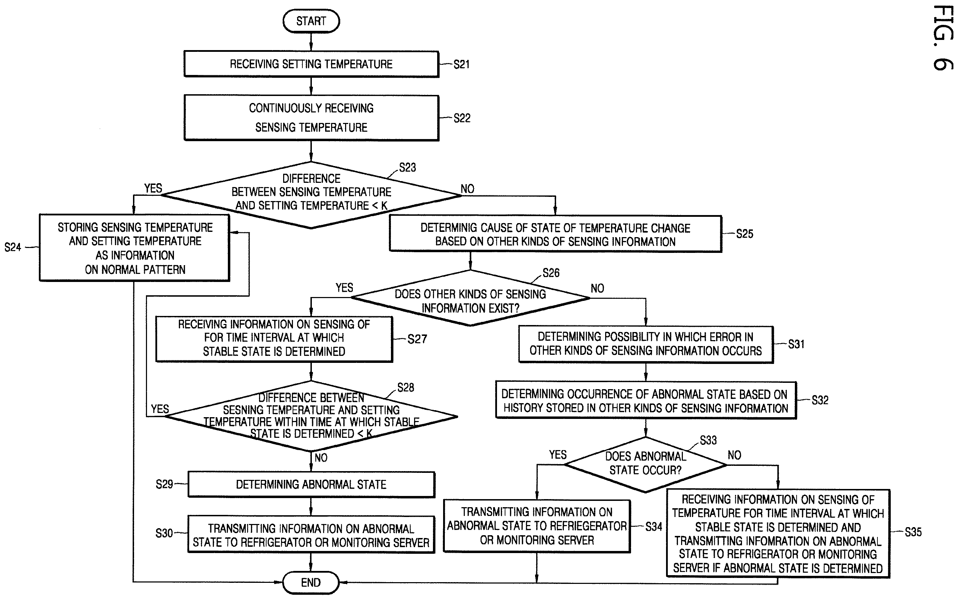

FIG. 6 shows a process of, by a cloud server, determining an abnormal state based on information on sensing of a temperature according to an embodiment of the present invention. A setting temperature of a refrigerating compartment or a freezer compartment (the setting temperature or a notch temperature) may be constant or the setting temperature may be gradually increased or decreased by artificial intelligence. On the other hand, the temperatures sensed in the refrigerating compartment and the freezer compartment are continuously changed by the actions of putting the articles in the refrigerator and taking the articles out from the refrigerator, an opening of a door, and an operation of a compressor, and the like. Therefore, a cloud server 200 may determine the abnormal state based on the change in the temperature sensed in the refrigerator and whether the changed temperature converges to the setting temperature.

The cloud server 200 receives the setting temperatures of a refrigerating compartment or a freezer compartment of a first refrigerator (S21). The setting temperature is not changed frequently, so the setting temperature may only be transmitted when the change in the setting temperature occurs. Then, the cloud server 200 continuously receives the sensing temperatures of the refrigerating compartment or the freezer compartment (S22).

If the difference between the received sensed temperature and the setting temperature is less than a predetermined magnitude K (S23), the cloud server 200 stores the setting temperature and sensing temperature of the refrigerator as information on normal pattern (S24). Of course, an analysis unit 300a or an analysis server may store the setting temperature and the sensing temperature of the refrigerator as information on normal pattern. The setting temperature and the sensing temperature of the refrigerator may be stored as information on normal pattern with respect to the temperature.

Meanwhile, the cloud server 200 identifies whether the difference between the received sensing information and the setting information is equal to or greater than the predetermined magnitude (S23). At this time, the cloud server 200 determines whether the changes in temperature occur based on other kinds of sensing information (information on sensing of the door, information on sensing about a compressor's operation, and the like) (S25).

After determination, if there is sensed information that enables a temperature change (S26), for example, when the door is opened or the compressor performs an additional operation, the cloud server 200 continuously receives the information on sensing of the temperature from the refrigerator during a time period of a confirmation of stable state (S27). According to an embodiment, the time period of a confirmation of stable state is a time required for the temperature to reach a stable state after the door is opened, or a time required for the temperature to be in the stable state corresponding to the operation of the compressor.

The time at which the stable state is reached may be predetermined or may vary depending on a magnitude of the temperature change. If the difference between the sensed temperature and the setting temperature is within a predetermined magnitude during the time at which the stable state is determined (S28), the cloud server 200 may determine that the temperature reaches the stable state.

On the other hand, after the time at which the stable state is reached, if the temperature is not in the stable state and the difference between the sensing temperature and the setting temperature is K or more, for example, when the temperature is lowered or increased continuously or the temperature is outside of a gap (K) between the sensing temperature and the setting temperature, the cloud server 200 may determine this state as the abnormal state (S29). If the abnormal state is determined, the information indicating the abnormal state (information on the abnormal state) is transmitted to a refrigerator 100 or a monitoring server 400 (S30), and the refrigerator 100 or the monitoring server 400 takes measures to resolve the abnormal state.

On the other hand, when there is no other kinds of sensing information that may justify a temperature change in S26, the cloud server 200 determines a possibility in which an error of other kinds of sensing information occurs. For example, an abnormal state in which the opening of the door is not detected is generated, or an abnormal state in which the operation of the compressor is not sensed is generated.

To this end, the cloud server 200 determines the abnormal state based on previous information on sensing of the door or the information on sensing of the compressor (history stored in the storage unit) (S32). If the information on sensing of the door or the information on sensing of the compressor has not been properly received or sensed, the cloud server 200 determines that the abnormal state has occurred (S33) and transmits the information on the abnormal state to the refrigerator 100 or the monitoring server 400 (S34), and the refrigerator 100 or the monitoring server 400 takes measures to resolve the abnormal state.

On the other hand, if there is no problem in the information on sensing of the door or the information on sensing of the compressor based on the past history, the cloud server 200 determines that the abnormal state does not occur. When the difference between the temperatures is continuously maintained or increased and is determined as the abnormal state by receiving the information on sensing of the temperature at a time interval until the stable state is reached, the information on the abnormal sate is transmitted to the refrigerator 100 or the monitoring server 400 (S35) and the refrigerator 100 or the monitoring server 400 takes measures to resolve the abnormal state.

As shown in FIG. 6, in the case of home appliances connected to a network, for example, the refrigerator, a failure state of the product may be detected in advance and a customer may be notified of the failure state of the product. In particular, information on the operation state of the home appliances may be sensed and the home appliance may transmit the sensed information to the cloud server. The cloud server or the analysis server may predict the failure of the product in advance based on the received information, and may proceed to repair and customer service.

In the past, only after the failure of the product occurred, the user recognized the failure of the product and asked the customer center to repair the product. Thus, there is a limitation that the repair is asked after the failure of the product has already occurred. Further, the user may wait for a long period of time to repair the product.

In addition, when the abnormality of the product occurs, the user may directly call for the service to solve the problem, but the user may not accurately explain the problem. Therefore, the user may erroneously notify the service center of a state of a defect of the product, and a repair may be performed twice or more.

When the embodiment of the present invention is applied, the home appliances such as the refrigerator continuously transmit sensing information generated during operation to the cloud server, and determine or predict the failure in advance based on the collected information, and notify the user of the failure of the home appliances such as the refrigerator. Further, as the repair may be preemptively performed in the abnormal state of the home appliances, it is possible to prevent the abnormal state from being changed to the failure state of the home appliances, thereby enabling quick and efficient product management and increasing a lifespan of the product.

According to an embodiment of the present invention, the types of sensing information generated during the operation of the refrigerator are described as follows. These kinds of information may be generated by various sensors shown in FIG. 3. Of course, these kinds of information may also be generated using a sensor other than the sensor of FIG. 3.

The kind of sensing information being transmitted online through the network by the refrigerator is described as follows.

The setting temperature and the sensing temperature of the refrigerating compartment and the setting temperature and the sensing temperature of the freezer compartment, and the door open information are basic information used to monitor a change in temperature and determine whether the refrigerator is in the abnormal state or the normal state based on changes in temperature.

According to an embodiment, information on the elapsed time after the installation of the refrigerator, and installation information of the installed external environment of the refrigerator are described as information on the installation of the refrigerator. The information includes a distance between the refrigerator and a surrounding wall, and elapsed time after the refrigerator has been installed. The cloud server 200 may determine the abnormal state of the refrigerator by measuring the internal temperature of the refrigerator during the elapsed time after the refrigerator is installed.

In this case, the cloud server 200 and the refrigerator 100 may transmit and receive the temperature information sensed in the refrigerator at short period when data is transmitted for a predetermined time period based on a time point at which the refrigerator is initially installed. It is possible to precisely determine whether the state of the refrigerator is in a temporal low cooling state occurring during the initial installation of the refrigerator or an abnormal state.

Further, when the refrigerator supports a special mode, the information on special mode setting is also included in the sensing information. For example, even though the information on special mode setting is analyzed by the cloud server and the abnormal state temporarily occurs, it is possible to determine whether the state of the refrigerator is in the abnormal state or the normal state based on the continuously received sensing information.

With respect to temporal noise, low cooling, excessive cooling, an occurrence of frost, and the like, the cloud server 200 may distinguish the special mode and a general mode (not including the special mode), and the cloud server 200 may determine the abnormal state in different methods corresponding to the each mode. Thus, the cloud server 200 may determine the abnormal state depending on the special mode. The setting information may only be transmitted when the setting information is newly set or changed. Alternatively, the setting information may be transmitted together with other kinds of sensing information.

In addition, information on operation of the compressor (Comp), information on a operation state of the motor, and information on an operation pattern of the compressor are included in sensing information. The information on operation of the compressor and the information on the operation state of the motor are required to identify a cause of temperature change when the change in temperature shows a abnormal behavior.

If the compressor is not operated properly or the motor is not operated properly, the temperature may be continuously increased or decreased. The cloud server or the analysis server determines the abnormal state of the compressor and the motor at the time point when the temperature is changed so as to generate information on the abnormal state finally.

The sensing information may include the normality or abnormality of the sensor and the operation pattern of the sensor as meta-information of the sensor. Information such as a defrost cycle, an amount of ice used, an amount of water used, pressure of the water supplied in the refrigerator, and an amount of a filter used is also sensed and transmitted continuously to the server. As a result, when a problem in a water pressure occurs or a filter (a water filter, an air purification filter, and the like) is determined to be replaced, the cloud server 200 may transmit a replacement cycle to the refrigerator as information on the abnormal state or the operation information.

In the case ice is used, the information on the amount of ice used by the user is transmitted to the cloud server 200, and when the user uses a larger amount of ice than a predicted or prepared amount of ice, the cloud server 200 may transmit the operation information to the refrigerator so that a display unit 160 outputs information related to a proper usage of ice (an amount of ice used per hour or a time taken to produce ice).

In the case of water pressure, by measuring of the pressure of the water supplied to the refrigerator, it is possible to notify the user of an excessive water pressure or low water pressure and recommend an optimal usage to the user.

Alternatively, the cloud server 200 may determine the information that the user uses excessive water during sensing of the water pressure. Accordingly, the cloud server 200 may transmit the operation information together with the above-mentioned information to the refrigerator such that the display unit 160 outputs the water usage that does not cause the low water pressure/high water pressure to the user. In this process, a time taken for the water to reach a proper temperature back may be outputted to the display unit 160 so that the user may not use the water until that time.

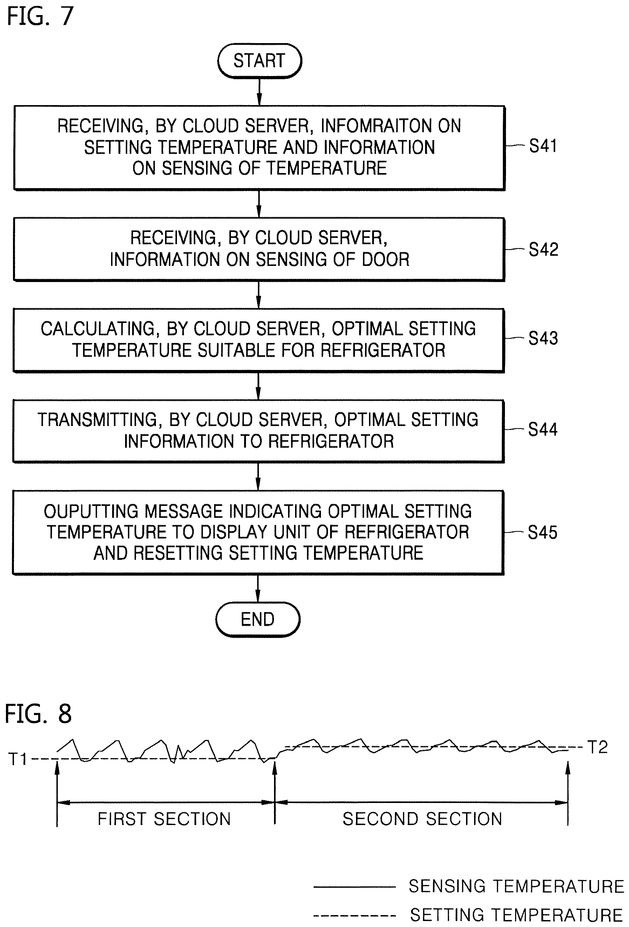

Further, the setting information on the function set by the user may be transmitted to the cloud server 200 periodically or at a time point when it is changed. Further, the cloud server 200 may recommend the optimal setting information obtained from the sensing information determined during the operation of the refrigerator based on setting information on the function set by the user. This will be described with reference to FIG. 8.

In particular, a time interval at which the sensing information (data) is transmitted may also be adjusted. Although all kind of sensing information may be transmitted at the same time, a part of sensing information may be transmitted at a shorter time interval when the abnormal state occurs, thereby making it possible to prevent in advance or respond to a failure more actively if the failure happens.

FIG. 7 shows a process of recommending an optimal setting temperature to a user based on sensed temperature information according to an embodiment of the present invention.

A cloud server 200 receives temperature information and information on sensing of the temperature set to the refrigerating compartment and the freezer compartment from a refrigerator (S41). Further, the cloud server 200 receives information on sensing of the door, that is, information on a time point when the door is opened and closed (S42). Then, the cloud server 200 calculates an optimal setting temperature suitable for the refrigerator based on the received information (S43). This will be described in more detail. The cloud server 200 or an analysis server 300 determines whether the operation of the refrigerator is in the abnormal state based on a current state of opening and closing the door, a setting temperature, and the information on sensing of the temperature.

After determination, when there is the abnormality in a current setting temperature, for example, when the door is frequently opened and closed based on a use pattern of the user (opening and closing the door) and the setting temperature is too low, an overload may occur. Further, in this process, the cloud server 200 or the analysis server 300 may determine that it takes a long time to enter the stable state after the door is opened based on the information on sensing of the temperature.

That is, if the operation of the refrigerator is determined to be in the abnormal state based on information on a combination of the temperature set by the user and the use pattern, the cloud server 200 transmits the information on the optimal setting temperature to the refrigerator so as to adjust the setting information (S44). According to an embodiment, the information on the optimal setting temperature is operation information. Further, information on the abnormal state may be transmitted together during transmission of the information on the optimal setting temperature.

As a result, when a display unit 160 of a refrigerator 100 outputs the received information on the abnormal state (a message indicating that the temperature setting is inadequate) and operation information (a message indicating the optimal setting temperature), and the user recognizes the received information on the abnormal state and the operation information, an optimal temperature of the refrigerating compartment or the freezer compartment may be reset automatically or manually by the user (S45). The setting temperature information reset in this process is transmitted to the cloud server 200 back and may be a basis for determining the subsequent operation state of the refrigerator.

The cloud server 200 may determine the optimal setting temperature by analyzing the setting temperature set by the user and the change pattern of the temperature in the refrigerator. Further, the cloud server 200 may recommend optimal temperature setting by analyzing previous setting temperature and conditions of the installation environment for the refrigerator (the external temperature and external humidity values).

FIG. 8 is an example of changing a setting temperature depending on a change in sensing temperature according to an embodiment of the present disclosure.

FIG. 8 shows that the sensing temperature repeats rising and falling in a first section when the setting temperature is set to T1. When the cloud server 200 determines that a magnitude of rising and falling of the sensing temperature exceeds a predetermined level, the refrigerator may be in an abnormal state in which the temperature setting causes an unstable operation of the refrigerator.

Then, the cloud server 200 transmits a message to reset the setting temperature to T2, and the setting temperature may be reset to T2 directly by the user or automatically. As a result, in the second section, the magnitude of rising and falling the temperature sensed by the refrigerator may be decreased so as to maintain a stable operation state.

FIG. 8 shows that the setting temperature is increased when there is a greater gap between a maximum value and a minimum value in the change pattern of the temperature sensed by the temperature sensor in the refrigerator. In addition, the setting temperature may be changed by comparing an external temperature with external humidity. That is, it is possible to increase an accuracy of the determination of the abnormal state by analyzing a temperature in the refrigerator based on installation information on the components provided outside of storage spaces of the refrigerator.

A cloud server 200 analyzes a change pattern of temperature and humidity outside of the refrigerator sensed by a temperature and humidity sensor provided outside to analyze a poor environment that has a bad influence on an operation of the refrigerator and recommend an appropriate installing environment and usage of the refrigerator. Further, the refrigerator may be installed inclined to the installation surface, and the cloud server 200 may determine that the refrigerator is in the abnormal state based on the sensed information on changes in temperature, humidity, or operation states of a compressor, which is generated dependently on when the refrigerator is installed.

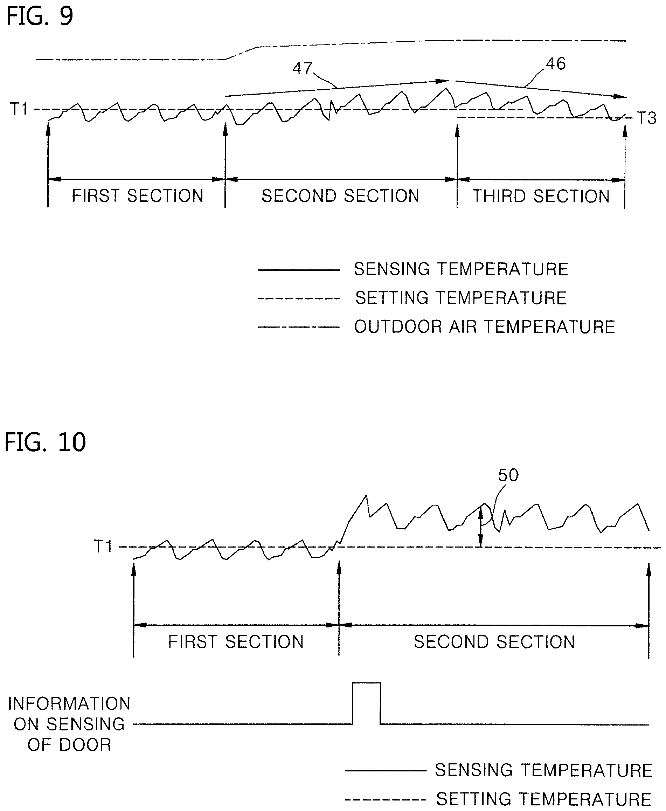

FIG. 9 shows resetting a setting temperature by reflecting an outdoor air temperature according to an embodiment of the present invention. In a first section, the outdoor air temperature is in a relatively stable state, and a temperature sensed in a refrigerator is also stable. In a second section, the outdoor air temperature and the temperature sensed in the refrigerator are continuously increased as indicated by arrow 47, and the outdoor air temperature and the temperature sensed in the refrigerator are continuously transmitted to a cloud server 200.

The cloud server 200 determines that an abnormal state in which freshness in the refrigerator may not be maintained due to an increase in external temperature occurs based on received information on outdoor air temperature and information sensed in the refrigerator, and transmits information on a resetting temperature optimized for the refrigerator so as to lower the setting temperature to T3. According to an embodiment, the transmitted information is the operation information of the refrigerator.

When the setting temperature is adjusted to T3 by the refrigerator 100, a temperature in the refrigerator gradually decreases in a third section as indicated by arrow 46.

As shown in FIGS. 8 and 9, the graphs showing the temperature change may be applied to a monitoring server 400. As a result, when the user inquires the customer center of an abnormal operation of the refrigerator, the monitoring server 400 determines the abnormal state based on information on monitoring of the previous change, or transmits the operation information to the refrigerator 100 to resolve the abnormal state.

In addition, it is possible to recommend a proper usage to the user based on information on opening and closing of the door. The door opening and closing time information is sensed by the door sensor and transmitted to the cloud server 200. The cloud server 200 transmits the information on the abnormal state to the refrigerator 100 when the door is opened for a long period of time, thereby warning the user that the door is opened. For example, sound may be outputted by a speaker provided in the refrigerator or a screen may flicker by a display unit 160, or a notification message may be transmitted to a registered smart phone of the user.

Further, when the door is determined to be frequently opened and closed based on the door opening and closing time information sensed by the door sensor, a message indicating an effective usage may be outputted to the display unit 160.

Further, the cloud server 200 may warn the low cooling/the excessive cooling based on an opening state of the door and the change pattern of the temperature in the refrigerator together with the temperature sensor and may recommend a method of coping with the low cooling/the excessive cooling to the user. For example, as shown in FIGS. 8 and 9, the cloud server 200 may analyze the sensed temperature change at time points when the door is opened and closed. Further, if the door is not opened frequently, a method of saving power of the refrigerator may be provided to the refrigerator.

For example, as shown in FIG. 9, after the door of the refrigerator is opened and closed at an end of the first section, when the temperature rises in the second section, the cloud server 200 may determine the abnormal state in which the door is not closed completely.

That is, when the sensing temperature continuously increases or decreases for a predetermined time range, a controller 250 of the cloud server 200 generates information on the abnormal state with respect to the door opening based on the information on sensing of the door and transmits the generated information on the abnormal state to the refrigerator.

FIG. 10 shows that a cloud server 200 determines an abnormal state based on door opening information and sensed temperature information according to an embodiment of the present invention.

A communication unit receives information on sensing of the temperature, e.g. a temperature of the refrigerating compartment or the freezer compartment, and information on sensing of a door, e.g. the opening and closing of the door, and whether the door is opened and then closed at an end of the first section. However, even after the door is closed (in the second section), the cloud server 200 may determine whether the temperature in the refrigerator is not lowered than the setting temperature T1, as indicated by 50.

There may have been a slight opening of the door, which the door sensor does not detect. The cloud server 200 may determine that the abnormal state has occurred when the second section continues for a predetermined period or more. Accordingly, a controller 150 compares the magnitude of changes in the temperature, information on time taken to reduce a magnitude of changes, and the information on sensing of the door to generate information on the abnormal state, and notify the user of the information on the abnormal state through a display unit 160 of a refrigerator 100 or a speaker, and the like.

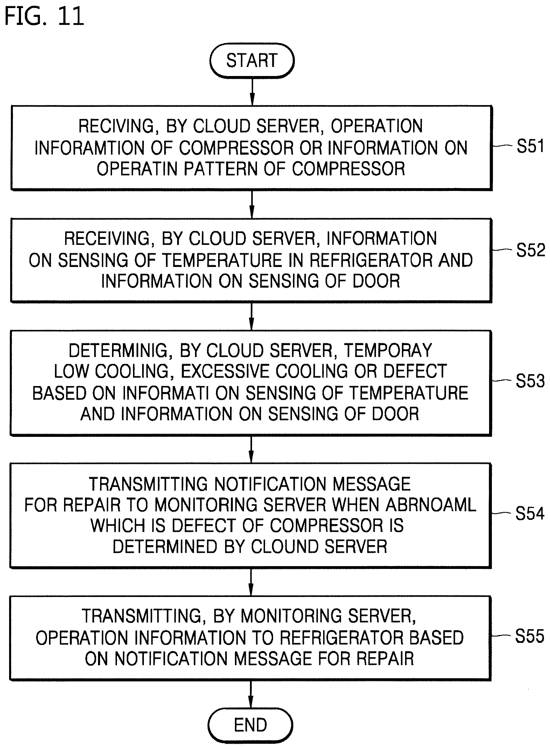

FIG. 11 shows a process in which a cloud server 200 determines an abnormal state based on information sensed during an operation of a compressor according to an embodiment of the present invention.

The cloud server 200 receives information on an operation time and an operation pattern of a compressor sensed by a sensor (a sensor of the compressor) installed in the compressor (S51). Further, information on sensing of the temperature in the refrigerator and information on sensing of the door are also received by the cloud server 200 during the transmission period (S52).

The cloud server 200 determines whether a temporary low cooling, an excessive cooling or a failure due to an excessive use of the refrigerator occurs based on an operation time (an on-off time, interval, number of times, and the like) and an operating pattern of the compressor (S53). For example, unlike before, a number of opening or closing of the door greater than a certain number, or a time period of door opening longer than a certain time period may be considered as an excessive use.

Further, when a temperature in the refrigerator rapidly rises after the door is opened and an article having a high temperature is put into the refrigerator, and therefore, the compressor may temporarily perform low cooling and excessive cooling to lower the temperature in the refrigerator. Therefore, the cloud server 200 analyzes the operation pattern based on the information on opening and closing of the door, rising and falling speeds of the temperature, and the like and determines whether it is a misuse (an excessive user) or in the abnormal state in which the defect occurs. When the cloud server 200 determines that the refrigerator is in the abnormal state in which the defect of the compressor occurs, the cloud server 200 transmits a notification message for repair to the monitoring server (S54).

A monitoring server 400 receives the operation information of the compressor, the information on operation pattern, the door opening and closing information, the temperature information, and the like from the cloud server 200 in a form of a notification message for repair and outputs the received information to a specific monitoring display unit 460a. A representative of the display unit 460a contacts the user of the refrigerator and generates operation (maintenance) information such as a customer service schedule for repair or optimal setting information that the user may perform. The generated operation information and/or the optimal setting information is transmitted to a refrigerator 100.

As shown in FIG. 11, in order to determine a malfunction or a defect of the compressor, the cloud server 200 may compare information on sensing of the temperature of the refrigerator, pattern information (a temperature pattern in a normal state or an abnormal state) received from the refrigerator, or additional information on sensing of the door, and generate information on the abnormal state of the compressor.

In this case, according to an embodiment, the pattern information defines a range of temperature change for a certain time period while the compressor is operated (for a time period for which the compressor repeats turning on or off). The pattern information defines a range of temperature change of normal state. The pattern information also defines a range of temperature change of abnormal state.

The cloud server 200 may determine whether the operation pattern of the compressor is misused or is defected based on the information on the operation of the compressor sensed by the compressor and the information on the temperature sensed by the temperature sensor. The cloud server 200 may analyze a pattern of the increase or decrease in the temperature sensed by the temperature sensor in the refrigerator to determine the abnormal state.

Of course, the cloud server 200 may omit S52 and determine the abnormal state of the compressor only based on the information sensed by the compressor.

For example, a controller 250 of the cloud server 200 may generate information on the abnormal state of the compressor of the refrigerator based on information, sensed by the compressor of the refrigerator, on a sensed operation pattern of the compressor or a continuous operation time of the compressor of the refrigerator, and an operation period of the compressor.

The cloud server 200 may determine the operation pattern of the compressor based on the information sensed by the compressor. In this process, the cloud server 200 may determine the continuous operation time of the compressor or the operation period of the compressor. When the information on the temperature sensed by the temperature sensor is compared with the information on the operation pattern of the compressor sensed by the compressor, if the abnormality occurs in the temperature change, or the temperature is not changed appropriately as the compressor is operated, the cloud server 200 may enhance the accuracy based on a sensing value of the other sensors when the abnormal state is determined.

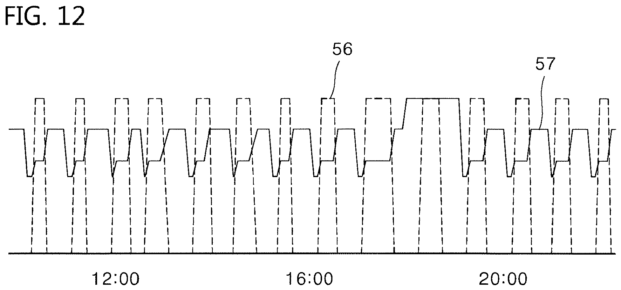

FIG. 12 shows information on a compressor received from a refrigerator according to an embodiment of the present invention. Reference numeral 56 denotes a time point at which a compressor is turned on and off. Reference numeral 57 denotes power of the compressor. A cloud server 200 receives information on a time when the compressor is turned on and off and power information of the compressor at each time point from the refrigerator, and determines an abnormal state based on a time period at which the compressor is turned on and off or a magnitude of the power of the compressor. For example, if the compressor is turned on for a predetermined time (for example, 30 minutes) or more, the cloud server 200 may determine that the abnormality occurs in the compressor.

In addition, even when the compressor is in the off state for a predetermined time (for example, 30 minutes) or more, the cloud server 200 may determine that the compressor is in the abnormal state.

In addition, the state of the compressor may be determined based on the on-off time point of the compressor and the magnitude of the power of the compressor. If the state of the compressor is determined as an abnormal state, the cloud server 200 transmits information on the abnormal state to notify the monitoring server 400 of the abnormal state, and then, information on customer service schedule or operation information may be generated by the monitoring server.

The cloud server 200 may enhance accuracy with respect to the determination of the abnormal state by utilizing a door opening and closing state or a state of the temperature in the refrigerator.

The cloud server 200 may accumulate and store information on normal operation pattern, which is a combination of various kinds of sensing information detected when the refrigerator is normally operated, or when or directly before a defect or a failure occurs. Alternatively, various kinds of information may be stored in an analysis server 300. The analysis server 300 or an analysis unit 300a of the cloud server 200 may determine that the compressor is in the abnormal state based on sensed information.

In addition, an exceptional operation pattern is defined when the product is determined to be in the abnormal state and a representative needs to visit to repair the product; however, when the product is not in the abnormal state but in the normal state, a combination of various kinds of sensing information may also be stored as information on normal operation pattern. At this time, the exceptional pattern may be used to the whole product group or only to the product which has been determined as in the abnormal state.

In one embodiment, the cloud server 200 or the analysis server 300 may store the information on normal operation pattern and information on abnormal pattern based on the information on sensing of the temperature and the information on sensing of the door. A temperature change range in the normal state after the door is opened or closed, or a time that is taken to reach the setting temperature may be stored as pattern information.

When the cloud server 200 or the analysis server 300 compares various kinds of pattern information, and the change in time or the change in the temperature exceeding the change range defined in the pattern information occurs, the controller 250 of the cloud server 200 may generate the information on the abnormal state.

In addition, the cloud server 200 determines the abnormal state of the refrigerator based on various kinds of generated sensing information. When the motor is not operated or is excessively operated, or the rotation speed exceeds a range of speed defined in the normal operation pattern based on the information on the sensed operation state or rotation speed of the motor of the refrigerator, the controller 250 of the cloud server 250 may generate the information on the abnormal state.

Further, the cloud server 200 may determine abnormality or normality of the sensor based on the sensed information. A temperature sensor, a sensor of the compressor, a door sensor, and the like generate a value that changes after a predetermined time. When the value is not changed at all for the predetermined period or the pattern of the sensed value is outside of a range of normal pattern, the cloud server 200 may determine that the sensor is in the abnormal state. Since the abnormality in the sensor causes the operation of the refrigerator not to be controlled, a difference of the sensed values may be analyzed by the cloud server 200 to determine the abnormal state.

In particular, the temperature sensor accurately determines an entire operation of the refrigerator, thereby enhancing the accuracy when the cloud server 200 determines the abnormal state. For example, the cloud server 200 determines a state of low cooling or excessive cooling by analyzing the pattern of the temperature change in the refrigerator, and determines that the state of low cooling or excessive cooling is the abnormal state when the state continues for a predetermined time or more.

Further, the cloud server 200 may predict a degree at which frost is generated, for example, a state in which the frost is excessively generated by analyzing the temperature in the refrigerator and the temperature pattern of a cooler (EVA). Further, if the temperature change is irregular or is outside of a range of the normal pattern, the defect of the fan motor may also be determined.

Further, information on the defrost cycle performed and related time information are also continuously transmitted to the cloud server 200. The cloud server 200 determines a misuse of the refrigerator by the user based on the transmitted information, and the cloud server 200 or the monitoring server 400 transmits the operation information including a correct usage to the refrigerator, thereby making it possible for the user to effectively use the refrigerator.

During the analysis of the defrost cycle and related time of the refrigerator, after the state in which the frost is excessively generated is determined, the cloud server 200 or the monitoring server 400 may transmit to the refrigerator the operation information including a method of selecting a function for removing the frost.

Meanwhile, the cloud server 200 may analyze a transmission period of data transmitted by the refrigerator and detect a state of power failure in a space where the refrigerator is disposed, and notify the user of the sensed state of power failure.

When the present invention is applied, there is no difficulty for the user to contact the service center to request for repair of the failure of the product. The customer service center may be effectively and rapidly operated as a service plan is established before the user requests the repair of the product. Further, the problem that a repair schedule has been erroneously established based on erroneous or incorrect information can be prevented since the user itself does not need to find the problem, thereby the arrangement of multiple repair schedules for the same failure can be prevented.

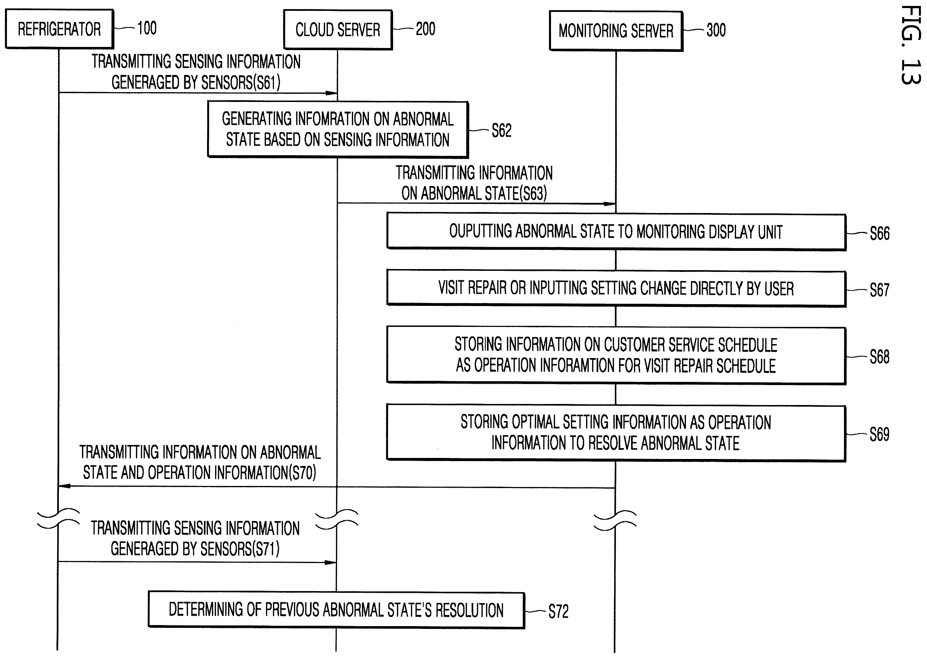

FIG. 13 shows operating each device according to an embodiment of the present invention. In order to determine an abnormal state, a refrigerator transmits operation information (sensing information) to a cloud server 200, and the cloud server 200 determines an abnormal state of the product and notifies the user of information on the abnormal state including a failure state. The cloud server or a monitoring server transmits, to the refrigerator, the operation information so that the user may perform to resolve a misuse or a failure.

A refrigerator 100 transmits sensing information generated by each of these sensors to the cloud server 200 during operation of a refrigerator 100 (S61). As described in various embodiments described above, the cloud server 200 determines an abnormal state based on the sensing information and generates information on the abnormal state (S62).

According to an embodiment, the information on the abnormal state includes a collection of various kinds of sensing information on an abnormal pattern. The sensing information at the time point when an abnormal state of the refrigerator occurs and before and after that time point may be considered information on the abnormal state, which indicates that it is determined that an abnormality occurs based on the information sensed by a temperature sensor and a door sensor.

According to another embodiment, the information on the abnormal state is a collection of a message indicating the abnormal state such as "TEMP_ERROR", "DOOR_ERROR", "COMP_ERROR" and the sensing information.

The cloud server 200 transmits the information on the abnormal state to a monitoring server 400 (S63). The monitoring server 400 outputs the abnormal state to the monitoring display units 460a to 460n managed or used by a monitoring representative of the refrigerator in which the abnormal state has occurred (S66). At this time, the monitoring server 400 may output the sensing information included in the information on the abnormal state to the monitoring display units 460a to 460n, and may output the information on normal pattern that may be compared with the sensing information.

Thereafter, the representative may identify the information on the abnormal state, input to the monitoring server 400 at least one of information on a visit repair and information which enables the user to directly change the setting to the monitoring server 400 (S67), and manage the history. If the visit repair is required, the representative confirms a schedule of the user and the repair representative, and stores the visit repair schedule as the operation information including the customer service schedule information in the monitoring server 400 (S68). In this process, if the abnormal state is resolved by replacing consumables in the refrigerator, a process of providing the consumables may be performed to replace the consumables.

If the problem can be solved through an manipulation by the user, the monitoring representative stores optimum setting information to resolve the abnormal state in the monitoring server 400 as operation information (S69).

Then, the monitoring server 400 transmits the information on the abnormal state and the operation information to the refrigerator 100 (S70). After a predetermined step to solve the problem (repair or optimal setting change) is performed, the refrigerator 100 transmits the sensing information generated by the sensors as exemplified in S61 (S71). In this process, the sensing period and the transmission period of the sensing information with respect to the abnormal state may be less than the transmission period of S61. That is, even though the problem generated has been solved, the cloud server 200 may confirm that the abnormal state is completely resolved by receiving the sensing information at a shorter period for the predetermined time period (one day or one week).

After confirming the sensing information for a predetermined time, the cloud server 200 determines that the previous abnormal state has been resolved (S72). Alternatively, the cloud server 200 may instruct the refrigerator 100 to change a sensing period and a transmission period of the data to an original period.

As shown in FIG. 13, the cloud server 200 accumulates and stores the information on a time point at which the refrigerator is installed and information on the usage of the refrigerator, so that it is possible to determine a replacement cycle of consumables in the refrigerator. When a replacement of the consumables is required, the monitoring server 400 may send a notification message to the user or transmit the notification message in advance to the user for replacement of the consumables.

In particular, the monitoring server 400 is provided in the service center, and it may be difficult to determine a cause of the malfunction of the product before the representatives directly determine the state of the product. The cloud server 200 determines the abnormal state and transmits the information on the abnormal state including the sensing information to the monitoring server 400. The representatives in the service center may also enhance the accuracy when the state of the refrigerator is determined, and caring service may be performed to enhance the user convenience.

FIG. 13 is summarized as follows. A communication unit 480 of the monitoring server receives information on the abnormal state of the first refrigerator and sensing information with respect to the information on the abnormal state from the cloud server (S63). A controller 450 of the monitoring server allows a monitoring display unit to output the received information, that is, the monitoring display units 460a to 460n managed by the representative of the first refrigerator and provides the information received by the communication unit 480 and the user information on the first refrigerator to the determined monitoring display unit (S66). The user information includes at least one of information on notification message recipient, subscriber information, application ID, product information (serial, a model name, and the like).

After the monitoring display units 460a to 460n output the received information, the monitoring representative transmits the abnormal state to the user by phone or by SMS via a contact number the user information includes. Further, if the schedule of the customer service is determined in order to resolve the abnormal state occurring in the process by call or SMS, and the like between the monitoring representative and the user, the schedule of the customer service is stored as operation information or transmitted to the refrigerator 100. That is, the communication unit 480 or the monitoring display units 460a to 460n may transmit the operation information required for resolving the abnormal state (the information on customer service schedule or the optimal setting information required for resolving the abnormal state) and the information on the abnormal state to the refrigerator 100 (S70).

In particular, the content with which the user and the monitoring representative communicate by call or SMS, and the like is stored in the storage unit 470, which is a data to determine that the monitoring is properly performed. That is, the monitoring display units 460a to 460n may receive the information on the abnormal state or the operation information provided by the monitoring person by call or SMS via telephone number the user information includes and store the received information on the abnormal state or the operation information to the storage unit 470. The stored information may be retrieved if necessary to determine the monitoring state or to determine that the customer service is provided.

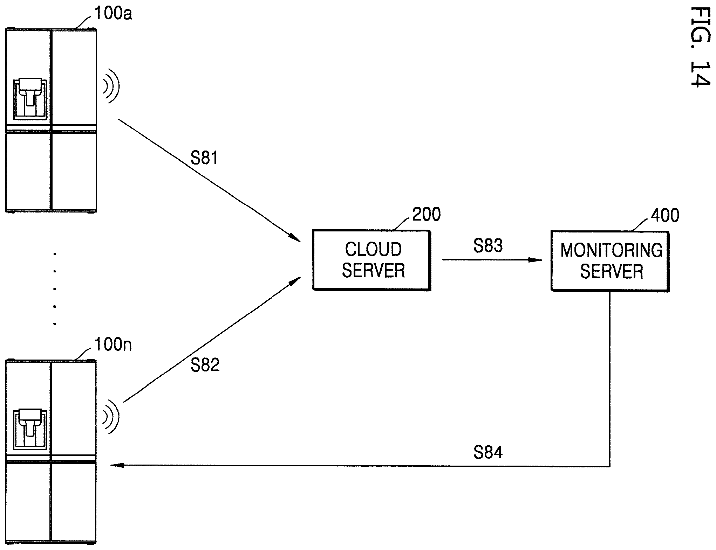

FIG. 14 shows transmitting, by a plurality of refrigerators, sensed information to a cloud server according to an embodiment of the present invention.

The plurality of refrigerators 100a, ..., 100n transmit information sensed by the various sensors shown in FIG. 3 to a cloud server 200 (S81 to S82). The cloud server 200 stores the received information together with identification information of each of these refrigerators 100a, ..., 100n and determines whether an abnormal state has occurred in each of these refrigerators 100a to 100n. In this process, the cloud server 200 accumulates and stores sensing information not about an abnormal state but about a normal state, to store a normal pattern.

The cloud server 200 may accumulate information sensed by one sensor in a time series and generate the normal pattern. Alternatively, the cloud server 200 may accumulate information sensed by two or more sensors in a time series and generate the normal pattern. After generating and storing the normal pattern for each particular type refrigerator for a predetermined time period, the normal pattern may be compared with the sensed information by the refrigerator in which the abnormal state occurs. As a result, when the abnormal state occurs in any one of refrigerators (for example, reference numeral 100n), the cloud server 200 may notify a monitoring server 400 of the occurrence of the abnormal state (S83) and the monitoring server 400, the refrigerator 100n or the user of the refrigerator may perform S67 to S70 as shown in FIG. 12.

As described above, the cloud server 200 may include an analysis unit 300a. Or, an analysis server 300 may operate independently with a cloud server 200. The cloud server 200 or the analysis server 300 may accumulate and store the information on the normal pattern and the abnormal pattern and determine whether the particular refrigerator is in the abnormal state or the normal state.

Although all of the components may be implemented as an independent hardware, a part or all of each of the components may be selectively combined to be implemented as a computer program that has a program module that performs some or all of the function combined in one or a large amount of hardware. The codes and the code segments that form the computer program will be easily deduced by those skilled in the art of the present invention. Such a computer program may be stored in a computer readable media that a computer can read, and can be read and implemented by the computer to implement the embodiment of the present invention. As the storage medium of the computer program, it may include a storage media including a semiconductor recording element, an optical recording media, and a magnetic recording media. Further, a computer program that implements the embodiment of the present invention may include a program module that is transmitted in real time via an external apparatus.

## Claims

1. A refrigerator detecting an abnormal state, comprising:
a temperature sensor (101) configured to sense a temperature of a refrigerating compartment and a freezer compartment;
a door sensor (102) configured to sense an opening and closing of a door;
a sensor (110) of a compressor configured to sense an operation pattern of the compressor;
an ice sensor (121) configured to sense an amount of ice used and a state of generated ice;
a water quantity and water pressure sensor configured to sense an amount of water used and water pressure;
a defrost sensor (130) configured to sense frost generated in the refrigerator;
a storage unit (170) configured to store information sensed by the sensors in combination with time information;
a communication unit (180) configured to transmit the stored information and setting information set for the refrigerating compartment and the freezer compartment to a cloud server (200);
a display unit (160) configured to output information; and
a controller (150) configured to control the sensors, the storage unit, the communication unit, and the display unit, and when the communication unit (180) receives information on an abnormal state of the refrigerator generated by the cloud server (200) or a monitoring server (400) based on the sensing information sensed by the sensors, the controller configured to control the display unit (160) to output the received information on the abnormal state,
**characterized in that** the information on the abnormal state is generated by the cloud server (200) based on first sensing information and second sensing information having an association with each other among the sensing information sensed by the various sensors, and
wherein the association denotes the second sensing information generated by a specific sensor being not matched with pattern information stored in the cloud server, and the cloud server (200) determines a state of the second sensing information that does not match with the pattern information as an abnormal state based on the first sensing information generated by other sensors different from the specific sensor, and generates the information on the abnormal state.

2. The refrigerator of claim 1, wherein the sensor that generates the second sensing information includes at least the information sensed by the temperature sensor and the sensor of the compressor.

3. The refrigerator of claim 1 or 2, wherein the communication unit (180) is configured to receive operation information required for resolving the abnormal state from the monitoring server (400), and the operation information includes information on customer service schedule or optimal setting information required for resolving the abnormal state.

4. The refrigerator of claim 3,
wherein the controller (150) is configured to display the information on the customer service schedule to the display unit (160), and
wherein the controller (150) is configured to accumulate and store information sensed by the one or more sensors with respect to the information on the abnormal state.

5. The refrigerator of any one of claims 1 to 4,
wherein the controller (150) is configured to differently manage a transmission period or a sensing period of sensing information depending on the one or more sensors, and
wherein a transmission period or sensing period of the sensing information sensed by the one or more sensors after the abnormal state has been resolved is set to be less than a corresponding transmission period or sensing period before the abnormal state has not been resolved.

6. A cloud server (200) detecting an abnormal state, comprising:
a communication unit (280) configured to receive sensing information sensed at a first time point from a first refrigerator;
a storage unit (270) configured to store the sensing information and store pattern information for determining an abnormal state by comparing the sensed information with various kinds of sensing information; and
a controller (250) configured to compare pattern information stored in the storage unit (270) with sensing information sensed by the first refrigerator at the first and second time points to determine whether the first refrigerator is in an abnormal state, and generate information on the abnormal state when the sensing information received by the communication unit indicates an abnormal state of the first refrigerator, and
when the information on the abnormal state is generated, the communication unit (280) transmits the information on the abnormal state to the first refrigerator or a monitoring server (400),
**characterized in that** the information on the abnormal state is generated by the controller based on first sensing information and second sensing information having an association with each other among various kinds of sensing information sensed by sensors of the first refrigerator, and
wherein the association denotes that the second sensing information generated by a specific sensor is not matched with the pattern information, and the controller (250) determines a state of the second sensing information that is not matched with the pattern information as the abnormal state based on the first sensing information generated by other sensors different from the specific sensor, and generates information on the abnormal state.

7. The cloud server of claim 6, wherein the sensor that generates the second sensing information is configured to include at least one of the temperature sensor and the sensor of the compressor.

8. The cloud server of claim 6 or 7, further comprising an analysis unit (300a) configured to accumulate and store information on a normal pattern and information on an abnormal pattern generated based on sensing information sensed by the first refrigerator and a plurality of second refrigerators, and provide the pattern information to the storage unit (270).

9. The cloud server of any one of claims 6 to 8, wherein the controller (250) is configured to determine information on an abnormal state of a compressor of the first refrigerator based on information sensed by the compressor for sensing an operation pattern of the compressor of the first refrigerator, a continuous operation time of the compressor, and an operation cycle of the compressor of the first refrigerator.

10. The cloud server of any one of claims 6 to 9, the cloud server (200) is configured to compare information on temperatures sensed and received from the first refrigerator and information on an operation pattern of the compressor generated from information sensed by the compressor, and to generate the information on the abnormal state of the compressor.

11. A method for detecting an abnormal state of a first refrigerator by a system comprising the first refrigerator, a cloud server and a monitoring server (400), comprising:
receiving (S63), by a communication unit (480) of the monitoring server, information on an abnormal state of the first refrigerator and sensing information with respect to the information on the abnormal state;
controlling (S66), by a controller (450) of the monitoring server (400), a monitoring display unit of a representative of the first refrigerator to output the information received by the communication unit (480) and providing information received by the communication unit and user information on the first refrigerator to a monitoring display unit (460a to 460n); and
transmitting (S70), by the communication unit (480) or the monitoring display unit (460a to 460n), operation information required for resolving the abnormal state and the information on the abnormal state to the first refrigerator after the monitoring display unit outputs the provided information,
**characterized in that** the information on the abnormal state is generated by the cloud server based on first sensing information and second sensing information having an association with each other among various kinds of sensing information sensed by sensors of the first refrigerator, and
wherein the association denotes the second sensing information generated by a specific sensor being not matched with pattern information stored in the cloud server, and the cloud server (200) determines a state of the second sensing information that does not match with the pattern information as an abnormal state based on the first sensing information generated by other sensors different from the specific sensor, and generates the information on the abnormal state.

12. The method of claim 11, wherein the monitoring display unit (460a to 460n) is configured to receive the information on the abnormal state or the operation information provided by the representative by call or SMS via a telephone number that the user information includes, and to store the received information in a storage unit (470).

13. The method of claim 11 or 12, wherein the operation information includes information on a customer service schedule or optimal setting information required to resolve the abnormal state.

## Patentansprüche

1. Kühlschrank, der einen anormalen Zustand detektiert und aufweist:
einen Temperatursensor (101), der so konfiguriert ist, dass er eine Temperatur eines Kühlfachs und eines Gefrierfachs erfasst;
einen Türsensor (102), der so konfiguriert ist, dass er Öffnen und Schließen einer Tür erfasst;
einen Sensor (110) eines Kompressors, der so konfiguriert ist, dass er ein Betriebsmuster des Kompressors erfasst;
einen Eissensor (121), der so konfiguriert ist, dass er eine Menge von verwendetem Eis und einen Zustand von erzeugtem Eis erfasst;
einen Wassermengen- und Wasserdrucksensor, der so konfiguriert ist, dass er eine Menge von verwendetem Wasser und Wasserdruck erfasst;
einen Abtausensor (130), der so konfiguriert ist, dass er im Kühlschrank erzeugten Reif erfasst;
eine Speichereinheit (170), die so konfiguriert ist, dass sie durch die Sensoren erfasste Informationen in Kombination mit Zeitinformationen speichert;
eine Kommunikationseinheit (180), die so konfiguriert ist, dass sie die gespeicherten Informationen und Einstellinformationen, die für das Kühlfach und das Gefrierfach eingestellt sind, zu einem Cloud-Server (200) sendet;
eine Anzeigeeinheit (160), die so konfiguriert ist, dass sie Informationen ausgibt; und
eine Steuerung (150), die so konfiguriert ist, dass sie die Sensoren, die Speichereinheit, die Kommunikationseinheit und die Anzeigeeinheit steuert, und wobei bei Empfang durch die Kommunikationseinheit (180) von Informationen über einen anormalen Zustand des Kühlschranks, die durch den Cloud-Server (200) oder einen Überwachungsserver (400) auf der Grundlage der durch die Sensoren erfassten Erfassungsinformationen erzeugt werden, die Steuerung so konfiguriert ist, dass sie die Anzeigeeinheit 160 steuert, um die empfangenen Informationen über den anormalen Zustand auszugeben,
**dadurch gekennzeichnet, dass** die Informationen über den anormalen Zustand durch den Cloud-Server (200) auf der Grundlage erster Erfassungsinformationen und zweiter Erfassungsinformationen mit einer Zuordnung zueinander unter den durch die verschiedenen Sensoren erfassten Erfassungsinformationen erzeugt werden, und
wobei die Zuordnung bezeichnet, dass die durch einen spezifischen Sensor erzeugten zweiten Erfassungsinformationen nicht mit im Cloud-Server gespeicherten Musterinformationen abgeglichen sind, und der Cloud-Server (200) einen Zustand der zweiten Erfassungsinformationen, die nicht mit den Musterinformationen abgeglichen sind, als anormalen Zustand auf der Grundlage der ersten Erfassungsinformationen bestimmt, die durch andere Sensoren als den spezifischen Sensor erzeugt werden, und die Informationen über den anormalen Zustand erzeugt.

2. Kühlschrank nach Anspruch 1, wobei der Sensor, der die zweiten Erfassungsinformationen erzeugt, mindestens die Informationen aufweist, die durch den Temperatursensor und den Sensor des Kompressors erfasst werden.

3. Kühlschrank nach Anspruch 1 oder 2, wobei die Kommunikationseinheit (180) so konfiguriert ist, dass sie zur Beseitigung des anormalen Zustands erforderliche Betriebsinformationen vom Überwachungsserver (400) empfängt, und die Betriebsinformationen Informationen über einen Kundendienstplan oder optimale Einstellinformationen aufweisen, die zur Beseitigung des anormalen Zustands erforderlich sind.

4. Kühlschrank nach Anspruch 3,
wobei die Steuerung (150) so konfiguriert ist, dass sie die Informationen über den Kundendienstplan auf der Anzeigeeinheit (160) anzeigt, und
wobei die Steuerung (150) so konfiguriert ist, dass sie durch den einen oder die mehreren Sensoren erfasste Informationen im Hinblick auf die Informationen über den anormalen Zustand sammelt und speichert.

5. Kühlschrank nach einem der Ansprüche 1 bis 4,
wobei die Steuerung (150) so konfiguriert ist, dass sie eine Sendeperiode oder eine Erfassungsperiode von Erfassungsinformationen in Abhängigkeit von dem einen oder den mehreren Sensoren verwaltet, und
wobei eine Sendeperiode oder Erfassungsperiode der Erfassungsinformationen, die durch den einen oder die mehreren Sensoren erfasst werden, nachdem der anormale Zustand beseitigt wurde, so eingestellt ist, dass sie kleiner als eine entsprechende Sendeperiode oder Erfassungsperiode ist, bevor der anormale Zustand nicht beseitigt wurde.

6. Cloud-Server (200), der einen anormalen Zustand detektiert und aufweist:
eine Kommunikationseinheit (280), die so konfiguriert ist, dass sie zu einem ersten Zeitpunkt erfasste Erfassungsinformationen von einem ersten Kühlschrank empfängt;
eine Speichereinheit (270), die so konfiguriert ist, dass sie die Erfassungsinformationen speichert und Musterinformationen zum Bestimmen eines anormalen Zustands durch Vergleichen der erfassten Informationen mit verschiedenen Arten von Erfassungsinformationen speichert; und
eine Steuerung (250), die so konfiguriert ist, dass sie in der Speichereinheit (270) gespeicherte Musterinformationen mit Erfassungsinformationen vergleicht, die durch den ersten Kühlschrank zum ersten und zu einem zweiten Zeitpunkt erfasst werden, um zu bestimmen, ob sich der erste Kühlschrank in einem anormalen Zustand befindet, und Informationen über den anormalen Zustand erzeugt, wenn die durch die Kommunikationseinheit empfangenen Erfassungsinformationen auf einen anormalen Zustand des ersten Kühlschranks verweisen, und
wobei bei Erzeugung der Informationen über den anormalen Zustand die Kommunikationseinheit (280) die Informationen über den anormalen Zustand zum ersten Kühlschrank oder zu einem Überwachungsserver (400) sendet,
**dadurch gekennzeichnet, dass** die Informationen über den anormalen Zustand durch die Steuerung auf der Grundlage erster Erfassungsinformationen und zweiter Erfassungsinformationen mit einer Zuordnung zueinander unter verschiedenen Arten von Erfassungsinformationen erzeugt werden, die durch Sensoren des ersten Kühlschranks erfasst werden, und
wobei die Zuordnung bezeichnet, dass die durch einen spezifischen Sensor erzeugten zweiten Erfassungsinformationen nicht mit den Musterinformationen abgeglichen sind, und die Steuerung (250) einen Zustand der zweiten Erfassungsinformationen, die nicht mit den Musterinformationen abgeglichen sind, als den anormalen Zustand auf der Grundlage der ersten Erfassungsinformationen bestimmt, die durch andere Sensoren als den spezifischen Sensor erzeugt werden, und Informationen über den anormalen Zustand erzeugt.

7. Cloud-Server nach Anspruch 6, wobei der Sensor, der die zweiten Erfassungsinformationen erzeugt, so konfiguriert ist, dass er den Temperatursensor und/oder den Sensor des Kompressors aufweist.

8. Cloud-Server nach Anspruch 6 oder 7, ferner mit einer Analyseeinheit (300a), die so konfiguriert ist, dass sie Informationen über ein normales Muster und Informationen über ein anormales Muster sammelt und speichert, die auf der Grundlage von Erfassungsinformationen erzeugt werden, die durch den ersten Kühlschrank und mehrere zweite Kühlschränke erfasst werden, und die Musterinformationen der Speichereinheit (270) zuführt.

9. Cloud-Server nach einem der Ansprüche 6 bis 8, wobei die Steuerung (250) so konfiguriert ist, dass sie Informationen über einen anormalen Zustand eines Kompressors des ersten Kühlschranks auf der Grundlage von Informationen, die durch den Kompressor zum Erfassen eines Betriebsmusters des Kompressors des ersten Kühlschranks erfasst werden, einer kontinuierlichen Betriebszeit des Kompressors und eines Betriebszyklus des Kompressors des ersten Kühlschranks bestimmt.

10. Cloud-Server nach einem der Ansprüche 6 bis 9, wobei der Cloud-Server (200) so konfiguriert ist, dass er Informationen über vom ersten Kühlschrank erfasste und empfangene Temperaturen und Informationen über ein Betriebsmuster des Kompressors, die anhand von durch den Kompressor erfassten Informationen erzeugt werden, vergleicht und die Informationen über den anormalen Zustand des Kompressors erzeugt.

11. Verfahren zum Detektieren eines anormalen Zustands eines ersten Kühlschranks durch ein den ersten Kühlschrank, einen Cloud-Server und einen Überwachungsserver (400) aufweisendes System, das aufweist:
durch eine Kommunikationseinheit (480) des Überwachungsservers erfolgendes Empfangen (S63) von Informationen über einen anormalen Zustand des ersten Kühlschranks und Erfassungsinformationen im Hinblick auf die Informationen über den anormalen Zustand;
durch eine Steuerung (450) des Überwachungsservers (400) erfolgendes Steuern (S66) einer Überwachungsanzeigeeinheit eines repräsentativen des ersten Kühlschranks, um die durch die Kommunikationseinheit (480) empfangenen Informationen auszugeben, und Führen von durch die Kommunikationseinheit empfangenen Informationen und Benutzerinformationen über den ersten Kühlschrank zu einer Überwachungsanzeigeeinheit (460a bis 460n); und
durch die Kommunikationseinheit (480) oder die Überwachungsanzeigeeinheit (460a bis 460n) erfolgendes Senden (S70) von Betriebsinformationen, die zur Beseitigung des anormalen Zustands erforderlich sind, und der Informationen über den anormalen Zustand zum ersten Kühlschrank, nachdem die Überwachungsanzeigeeinheit die zugeführten Informationen ausgibt,
**dadurch gekennzeichnet, dass** die Informationen über den anormalen Zustand durch den Cloud-Server auf der Grundlage erster Erfassungsinformationen und zweiter Erfassungsinformationen mit einer Zuordnung zueinander unter verschiedenen Arten von Erfassungsinformationen erzeugt werden, die durch Sensoren des ersten Kühlschranks erfasst werden, und
wobei die Zuordnung bezeichnet, dass die durch einen spezifischen Sensor erzeugten zweiten Erfassungsinformationen nicht mit im Cloud-Server gespeicherten Musterinformationen abgeglichen sind, und der Cloud-Server (200) einen Zustand der zweiten Erfassungsinformationen, die nicht mit den Musterinformationen abgeglichen sind, als anormalen Zustand auf der Grundlage der ersten Erfassungsinformationen bestimmt, die durch andere Sensoren als den spezifischen Sensor erzeugt werden, und die Informationen über den anormalen Zustand erzeugt.

12. Verfahren nach Anspruch 11, wobei die Überwachungsanzeigeeinheit (460a bis 460n) so konfiguriert ist, dass sie die Informationen über den anormalen Zustand oder die Betriebsinformationen, die durch den repräsentativen zugeführt werden, durch Anruf oder SMS über eine Telefonnummer empfängt, die zu den Benutzerinformationen gehört, und die empfangenen Informationen in einer Speichereinheit (470) speichert.

13. Verfahren nach Anspruch 11 oder 12, wobei die Betriebsinformationen Informationen über einen Kundendienstplan oder optimale Einstellinformationen aufweisen, die zur Beseitigung des anormalen Zustands erforderlich sind.

## Revendications

1. Réfrigérateur détectant un état anormal, comprenant :
un capteur de température (101) configuré pour détecter une température d'un compartiment de réfrigération et d'un compartiment de congélation ;
un capteur de porte (102) configuré pour détecter une ouverture et une fermeture d'une porte ;
un capteur (110) d'un compresseur configuré pour détecter un modèle de fonctionnement du compresseur ;
un capteur de glace (121) configuré pour détecter une quantité de glace utilisée et un état de glace produite ;
un capteur de quantité d'eau et de pression d'eau configuré pour détecter une quantité d'eau utilisée et une pression d'eau ;
un capteur de dégivrage (130) configuré pour détecter du givre produit dans le réfrigérateur ;
une unité de stockage (170) configurée pour stocker une information détectée par les capteurs en combinaison avec l'information de temps ;
une unité de communication (180) configurée pour transmettre l'information stockée et l'information de réglage réglée pour le compartiment de réfrigération et le compartiment de congélation à un serveur en nuage (200) ;
une unité d'affichage (160) configurée pour délivrer une information ; et
un dispositif de commande (150) configuré pour commander les capteurs, l'unité de stockage, l'unité de communication et l'unité d'affichage, et lorsque l'unité de communication (180) reçoit l'information sur un état anormal du réfrigérateur produit par le serveur en nuage (200) ou un serveur de surveillance (400) sur la base de l'information de détection détectée par les capteurs, le dispositif de commande est configuré pour commander à l'unité d'affichage (160) la délivrance de l'information reçue sur l'état anormal,
**caractérisé en ce que** l'information sur l'état anormal est produite par le serveur en nuage (200) sur la base de la première information de détection et de la seconde information de détection présentant une association l'une avec l'autre parmi l'information de détection détectée par les divers capteurs, et
dans lequel l'association désigne la seconde information de détection produite par un capteur spécifique qui n'est pas en correspondance avec l'information de modèle stockée dans le serveur en nuage, et le serveur en nuage (200) détermine un état de la seconde information de détection qui ne correspond pas à l'information de modèle comme un état anormal sur la base de la première information de détection produite par d'autres capteurs différents du capteur spécifique, et produit l'information sur l'état anormal.

2. Réfrigérateur selon la revendication 1, dans lequel le capteur qui produit la seconde information de détection comporte au moins l'information détectée par le capteur de température et le capteur du compresseur.

3. Réfrigérateur selon la revendication 1 ou 2, dans lequel l'unité de communication (180) est configurée pour recevoir l'information de fonctionnement requise pour résoudre l'état anormal à partir du serveur de surveillance (400), et l'information de fonctionnement comporte l'information sur le programme de service client ou l'information de réglage optimal requise pour résoudre l'état anormal.

4. Réfrigérateur selon la revendication 3,
dans lequel le dispositif de commande (150) est configuré pour afficher l'information sur le programme de service client sur l'unité d'affichage (160), et
dans lequel le dispositif de commande (150) est configuré pour cumuler et stocker l'information détectée par les un ou plusieurs capteurs par rapport à l'information sur l'état anormal.

5. Réfrigérateur selon l'une des revendications 1 à 4,
dans lequel le dispositif de commande (150) est configuré pour gérer différemment une période de transmission ou une période de détection d'information de détection dépendant des un ou plusieurs capteurs, et
dans lequel une période de transmission ou période de détection de l'information de détection détectée par les un ou plusieurs capteurs après que l'état anormal a été résolu, est réglée pour être inférieure à une période de transmission ou période de détection correspondante avant que l'état anormal n'ait été résolu.

6. Serveur en nuage (200) détectant un état anormal, comprenant :
une unité de communication (280) configurée pour recevoir une information de détection détectée à un premier instant à partir d'un premier réfrigérateur ;
une unité de stockage (270) configurée pour stocker l'information de détection et stocker l'information de modèle pour déterminer un état anormal par comparaison de l'information détectée avec divers types d'information de détection ; et
un dispositif de commande (250) configuré pour comparer l'information de modèle stockée dans l'unité de stockage (270) avec l'information de détection détectée par le premier réfrigérateur aux premier et second instants pour déterminer si le premier réfrigérateur est dans un état anormal, et produire l'information sur l'état anormal lorsque l'information de détection reçue par l'unité de communication indique un état anormal du premier réfrigérateur, et
lorsque l'information sur l'état anormal est produite, l'unité de communication (280) transmet l'information sur l'état anormal au premier réfrigérateur ou un serveur de surveillance (400),
**caractérisé en ce que** l'information sur l'état anormal est produite par le dispositif de commande sur la base de la première information de détection et de la seconde information de détection présentant une association l'une avec l'autre parmi divers types d'information de détection détectée par des capteurs du premier réfrigérateur, et
dans lequel l'association indique que la seconde information de détection produite par un capteur spécifique n'est pas en correspondance avec l'information de modèle, et le dispositif de commande (250) détermine un état de la seconde information qui n'est pas en correspondance avec l'information de modèle comme l'état anormal sur la base de la première information de détection produite par d'autres capteurs différents du capteur spécifique, et produit l'information sur l'état anormal.

7. Serveur en nuage selon la revendication 6, dans lequel le capteur qui produit la seconde information de détection est configuré pour comporter au moins un parmi le capteur de température et le capteur du compresseur.

8. Serveur en nuage selon la revendication 6 ou 7, comprenant en outre une unité d'analyse (300a) configurée pour cumuler et stocker l'information sur un modèle anormal et l'information d'un modèle anormal produite sur la base de l'information de détection détectée par le premier réfrigérateur et une pluralité de seconds réfrigérateurs, et fournir l'information de modèle à l'unité de stockage (270).

9. Serveur en nuage selon l'une des revendications 6 à 8, dans lequel le dispositif de commande (250) est configuré pour déterminer l'information sur un état anormal d'un compresseur du premier réfrigérateur sur la base de l'information détectée par le compresseur pour la détection d'un modèle de fonctionnement du compresseur du premier réfrigérateur, d'un temps de fonctionnement continu du compresseur, et d'un cycle de fonctionnement du compresseur du premier réfrigérateur.

10. Serveur en nuage selon l'une des revendications 6 à 9, le serveur en nuage (200) est configuré pour comparer l'information sur des températures détectées et reçues du premier réfrigérateur et l'information sur un modèle de fonctionnement du compresseur produit à partir de l'information détectée par le compresseur, et pour produire l'information sur l'état anormal du compresseur.

11. Procédé de détection d'un état anormal d'un premier réfrigérateur par un système comprenant le premier réfrigérateur, un serveur en nuage et un serveur de surveillance (400), comprenant :
la réception (S63), par une unité de communication (480) du serveur de surveillance, de l'information sur un état anormal du premier réfrigérateur et de l'information de détection par rapport à l'information sur l'état anormal ;
la commande (S66), par un dispositif de commande (450) du serveur de surveillance (400), d'une unité d'affichage de surveillance d'un représentant du premier réfrigérateur pour délivrer l'information reçue par l'unité de communication (480) et fournissant l'information reçue par l'unité de communication et l'information d'utilisateur sur le premier réfrigérateur à une unité d'affichage de surveillance (460a à 460n) ; et
la transmission (S70), par l'unité de communication (480) ou l'unité d'affichage de surveillance (460a à 460n), de l'information de fonctionnement requise pour la résolution de l'état anormal et de l'information sur l'état anormal au premier réfrigérateur après que l'unité d'affichage de surveillance délivre l'information fournie,
**caractérisé en ce que** l'information sur l'état anormal est produite par le serveur en nuage sur la base de la première information de détection et de la seconde information de détection présentant une association l'une avec l'autre parmi divers types d'information de détection détectée par des capteurs du premier réfrigérateur, et
dans lequel l'association indique que la seconde information de détection produite par un capteur spécifique n'est pas en correspondance avec l'information de modèle stockée dans le serveur en nuage, et le serveur en nuage (200) détermine un état de la seconde information de détection qui ne correspond pas à l'information de modèle comme un état anormal sur la base de la première information de détection produite par d'autres capteurs différents du capteur spécifique, et produit l'information sur l'état anormal.

12. Procédé selon la revendication 11, dans lequel l'unité d'affichage de surveillance (460a à 460n) est configurée pour recevoir l'information sur l'état anormal ou l'information de fonctionnement fournie par le représentant par appel ou SMS via un numéro de téléphone que l'information d'utilisateur comporte, et pour stocker l'information reçue dans une unité de stockage (470).

13. Procédé selon la revendication 11 ou 12, dans lequel l'information de fonctionnement comporte une information sur un programme de service client ou une information de réglage optimal requise pour résoudre l'état anormal.
